Europäisches Patentamt

European Patent Office

Office européen des brevets

(19)

(11) Veröffentlichungsnummer: **0 126 914**
**A2**

## (12) EUROPÄISCHE PATENTANMELDUNG

(21) Anmeldenummer: **84103864.9**

(22) Anmeldetag: **07.04.84**

(51) Int. Cl.³: **G 02 F 1/133**

(30) Priorität: **12.04.83 CH 1968/83**

(43) Veröffentlichungstag der Anmeldung:
**05.12.84 Patentblatt 84/49**

(84) Benannte Vertragsstaaten:
**AT BE DE FR GB IT LU NL SE**

(71) Anmelder: **Granotechnik AG**
**Kirchstrasse 5a**
**CH-8280 Kreuzlingen(CH)**

(72) Erfinder: **Miroslav, Ondris**
**Rietkraag 18**
**NL-Schiedam(NL)**

(74) Vertreter: **Blum, Rudolf Emil Ernst et al,**
**c/o E. Blum & Co Patentanwälte Vorderberg 11**
**CH-8044 Zürich(CH)**

(54) Steuerungseinrichtung zum Steuern einer feldempfindlichen Anzeigeeinrichtung mittels Halbleiterelemente, durch die Steuerungseinrichtung gesteuerte Anzeigeeinrichtung und Halbleiterelement.

(57) Ein Substrat (2) ist mit ersten Segmentelektroden (3) einer gesteuerten Flüssigkristall-Anzeigeeinrichtung (1), welche zudem zweite Segmentelektroden (10) hat, versehen. Zur Steuerung der Anzeigesegmente ist auf jede erste Segmentelektrode (3) eine erste Elementelektrode (4) und auf diese ein Halbleiterelement (5) aufgebracht, das mit einer zweiten Elementelektrode (6) versehen ist. Alle zweiten Elementelektroden (6) sind gruppenweise an Adressenleitungen (7) angeschlossen. In jedem eine Dünnschichtstruktur aufweisenden Halbleiterelement (5) liegt eine Potentialbarriere vor, deren Höhe oberhalb einer Schwellenspannung von der angelegten Spannung und zusammen mit der Konzentration an von aussen freigemachten Ladungsträgern den Strom durch das Halbleiterelement beeinflusst. Der Verlauf der Potentialbarriere ist durch die Konzentration an Dotierstoffatomen und Trapzentren bestimmt. Diese symmetrisch steuerbare Anzeigeeinrichtung weist eine steile Kennlinie sowie eine leicht und grossflächig herstellbare, integrierte Struktur auf.

Fig. 1

- 1 -

Steuerungseinrichtung zum Steuern einer feldempfindlichen
Anzeigeeinrichtung mittels Halbleiterelementen, durch die
Steuerungseinrichtung gesteuerte Anzeigeeinrichtung und
Halbleiterelement
------------------------------------------------------------

Die Erfindung bezieht sich auf eine Steuerungseinrichtung zum Steuern einer feldempfindlichen Anzeigeeinrichtung gemäss dem Oberbegriff des Patentanspruches 1
auf eine Anzeigeeinrichtung zur Darstellung einer ein
Bildmuster enthaltenden Information durch Steuerung mittels dieser Steuerungseinrichtung, sowie auf ein Halbleiterelement. Unter der Darstellung der Information auf
der Anzeigeeinrichtung wird hierbei allgemein die Darstellung von Zeichen, Zahlen, Textteilen, Diagrammen und
auch Bildern, z.B. Fernsehbildern, verstanden.

Es sind verschiedene Anordnungen und Verfahren
zum Ansteuern von Matrizen von Flüssigkristall-Anzeigeeinrichtungen (Display) im Multiplexbetrieb über Halbleiterelemente bekannt. In den bekannten Anordnungen sind
die Halbleiterelemente beispielsweise Feldeffekt-Transistoren (FET, MOSFET, JFET) aus monokristallinem Silizium
oder Dünnschicht-Transistoren (TFT) aus Kadmiumselenid
(vgl. Proceedings of the SID, Vol. 23/1, 1982, Seite 37).
Es ist auch bekannt, Feldeffekt-Transistoren aus amorphen
Silizium zu verwenden (vgl. Electronics Letters, Vol. 15,
1979, Seite 179 und Applied Physics, Vol. 23, 1982, Seite
357), oder aber auch Elemente mit zwei Anschlüssen, wie beispielsweise Metall-Isolator-Metall-Elemente (MIM), vgl. IEE Transactions on Electron Devices, Vol. ED-28, 1981, Seite 736, welche auf dem Poole-Frenkel-Mechanismus basieren. Alle genannte Halbleiterelemente weisen eine nichtlineare Strom-Spannungskennlinie auf und sind in einer Matrixform angeordnet.

Dünnschicht-Transistoren haben den Nachteil, dass sie verhältnismässig langsam sind und im Einschaltzustand nicht immer ausreichend leitend und identisch sind. MIM-Elemente und teilweise auch Feldeffekt-Transistoren aus polykristallinem Silizium sind in der Herstellung schwer reproduzierbar. Auch ist die Steilheit der Strom-Spannungskennlinie der MIM-Elemente nur kritisch ausreichend. In allen Fällen handelt es sich bei den bekannten Anordnungen um verhältnismässig komplizierte Strukturen, deren Herstellungskosten hoch sind. Dies gilt insbesondere für Halbleiterelemente aus monokristallinem Silizium, für welche sich zudem die beschränkten Abmessungen einer Siliziumscheibe von etwa 10 cm Durchmesser nachteilig auswirken. Monokristalline Siliziumscheiben sind ausserdem ungeeignet für Flüssigkristall-Anzeigeeinrichtungen (Displays), welche zwei Polarisatoren benötigen.

Aufgabe der Erfindung ist es, eine Steuerungseinrichtung der eingangs genannten Art zu schaffen, die eine leicht und grossflächig herstellbare Struktur hat.

Erfindungsgemäss weist die eingangs genannte Steuerungseinrichtung die im kennzeichnenden Teil des Patentanspruches 1 angeführten Merkmale auf.

Eine durch diese Steuerungseinrichtung gesteuerte Anzeigeeinrichtung ist erfindungsgemäss durch die im Patentanspruch 20 angeführten Merkmale gekennzeichnet.

Ferner weist das erfindungsgemässe Halbleiterelement die im Patentanspruch 25 angeführten Merkmale auf.

Die Erfindung beruht auf der Anwendung von Halbleiterelementen, die in der Folge des Auftretens eines Punch-Through-Effektes eine Strom-Spannungskennlinie mit einer Schwellenspannung, einer angenähert exponentiellen Zunahme des Stromes oberhalb der Schwellenspannung und ein symmetrisches Verhalten (Unabhängigkeit von der Polarität der angelegten Spannung) zeigen, vgl. beispielsweise Journal of Applied Physics, Vol. 43, 1972, Seite 3510 für eine pnp- und npn-Struktur, oder Solid State Electronics, Vol. 24, 1981, Seite 805 für die Struktur eines Injektionstransistors oder die Europäische Patentschrift 0 003 130. Auf der Grundlage einer solchen bekannten Struktur der Halbleiterelemente lässt sich die erfindungsgemässe Steuerungseinrichtung aufbauen, die vorzugsweise matrixförmig ist und mittels welcher eine aus einer grossen Anzahl von Segmenten bestehende elektrooptische Anzeigeeinrichtung, insbesondere eine Flüssigkristall-Anzeigeeinrichtung, angetrieben, angesteuert, überwacht oder abgetastet werden kann, um Bilder, Texte, Daten und Bildmuster optisch darzustellen, oder aber auch um elektromagnetische Strahlung, welche eine Bild- oder Bildmusterinformation enthält, in elektrische Signale umzusetzen, zu detektieren oder wiederzugeben.

Der genannte Punch-Through-Effekt wird mit besonderem Vorteil in der erfindungsgemässen Steuerungseinrichtung angewendet, deren Halbleiterelemente vorzugsweise einen Halbleiterkörper aus amorphem und/oder mikrokristallinem Silizium haben, das mit Wasserstoff angereichert ist, oder einen Halbleiterkörper aus polykristallinem Silizium haben. Hierbei ist in Betracht zu ziehen, dass die Beweglichkeit der Ladungsträger einige Male kleiner ist als bei monokristallinem Silizium und dass durch das Vorhandensein einer hohen Dichte von Rekombinationszentren die Lebensdauer der Ladungsträger sehr klein ist. Das Vorhandensein einer grossen Anzahl von tief im verbotenen Band liegenden Störstellen, sogenannten "Trapzentren" hat einen grossen Einfluss auf den Verlauf des Potentials und des elektrischen Feldes im Innern des Halbleiterelementes und dadurch auf den Wert der Schwellenspannung, bei der es zu einem Punch-Through-Effekt kommt, jedoch keinen wesentlichen Einfluss auf den angenähert exponentiellen Verlauf der Strom-Spannungskennlinie. So lässt sich in vorteilhafter Weise die gewünschte symmetrische und steile Strom-Spannungskennlinie des in Reihe zu den Anzeigesegmenten geschalteten Halbleiterelementes erzielen, nämlich mit Dünnschicht-Halbleitermaterialien, die im Vergleich zu einkristallinen Halbleitermaterialien eine grosse Zustandsdichte im verbotenen Band ("Trapdichte") aufweisen.

Ausführungsbeispiele des Erfindungsgegenstandes werden nachstehend anhand der Zeichnungen erläutert. Es zeigen:

Fig. 1 eine schematische, perspektivische Ansicht eines wesentlichen Teiles einer Flüssigkristall-Anzeigeeinrichtung mit Halbleiterelementen zu deren Steuerung,

Fig. 2 und 3 Draufsichten auf zwei Ausführungsformen eines mit Elektroden versehenen, an eine Segmentelektrode und eine Adressenleitung angeschlossenen Halbleiterelementes der Fig. 1,

Fig. 4 einen Schnitt durch ein vertikal ausgebildetes Halbleiterelement,

Fig. 5 ein Diagramm der Energiebänder des Halbleiterelementes der Fig. 4 für verschiedene angelegte Spannungen,

Fig. 6 eine Darsellung der Strom-Spannungskennlinien in Dunkelheit und unter Beleuchtung für vier bzw. zwei Halbleiterelemente unterschiedlichen Aufbaus für Anzeigeeinrichtungen verschiedener Art, und

Fig. 7 ein Schema zur Multiplex-Steuerung von Segmenten der Flüssigkristall-Anzeigeeinrichtung mittels der Halbleiterelemente.

Zur Ansteuerung der Segmente einer Flüssigkristall-Datenanzeigeeinrichtung mittels Halbleiterelementen sind solche erwünscht, die in ihrer Strom-Spannungskennlinie eine Schwellenspannung haben. Mit anderen Worten soll der durch das Halbleiterelement in der einen oder in der anderen Richtung fliessende Strom sehr klein für Spannungen am Halbleiterelement sein, die unterhalb der genannten Schwellenspannung liegen. Für Spannungen oberhalb der Schwellenspannung soll der Strom sehr rasch ansteigen.

Aktive Halbleiterelemente nach der Erfindung zeigen dieses Verhalten, wenn ein Teil des Halbleiterkörpers im thermischen Gleichgewicht neutral bleibt, d.h. nicht enträumt von beweglichen Ladungsträgern ist. In einem derartigen Fall bleibt der Strom für Spannungen die kleiner sind als die Schwellenspannung, sehr klein, nämlich etwa gleich dem Sperrstrom einer pn-Diode, einer Schottky-Diode oder eines Hetero-Uebergangs. In einem Halbleitermaterial mit sehr kurzer Lebensdauer der Minoritäts-Ladungsträger, wie beispielsweise in amorphem, mit Wasserstoff angereichertem Silizium, tritt keine Injektionstransistorwirkung auf, da hierzu die Diffusionslänge zu gering ist. Andererseits kann die Stromzunahme für Spannungen, die grösser sind als die Schwellenspannung, ungefähr als exponentielle Funktion dargestellt werden. Der Idealfaktor, der die Steilheit der Strom-Spannungskennlinie darstellt, kann hierbei von der angelegten Spannung abhängig sein und einen Wert etwa gleich 2 oder grösser als 2 haben, unabhängig davon, ob der Strom durch thermionische Emission der Ladungsträger über die Potentialbarriere oder durch Diffusion der Ladungsträger in der Raumladungszone begrenzt ist. Bei hohen Spannungen kann es zu einem raumladungsbegrenzten Strom kommen (Raumladung durch hohe Injektion von freien Ladungsträgern); allenfalls ist der Strom durch einen ohmschen Widerstand begrenzt.

Beim Erfindungsgegenstand ist es von Vorteil, dass die Schwellenspannung, bei welcher der Strom beginnt, steil zunimmt, vornehmlich durch die Dicke und die

- 6 -     0126914

Dotierung sowie die Trapzentren-Konzentration desjenigen Teils des Halbleiterkörpers bestimmbar ist, in welchem sich die Potentialbarriere befindet. Auf diese Weise kann man die Halbleiterelemente leicht an den Typ der zugeordneten Flüssigkristallanzeigeeinrichtung anpassen. Die Steilheit der Stromspannungskennlinie (Idealfaktor) ist vor allem von der Dotierung der Dicke des inneren Teils des Halbleiterkörpers abhängig.

Obwohl für das Halbleitermaterial der vorliegenden Halbleiterelemente sich amorphes oder mikrokristallines, mit Wasserstoff angereichertes Silizium als besonders vorteilhaft erwiesen hat, können auch andere mit Wasserstoff und/oder einem Halogen, wie Fluor, angereicherte Materialien aus der Gruppe von Silizium, Germanium, Zinn und Kohlenstoff und deren Kombinationen, beispielsweise Siliziumkarbid, Verwendung finden.

Sehr brauchbar sind alle Halbleitermaterialien, die sich in Form dünner Schichten herstellen lassen und in welchen eine Verarmung an beweglichen Ladungsträgern durch die Anwesenheit eines pn-Uebergangs oder eines Hetero-Uebergangs oder einer Schottky-Barriere hervorgerufen werden kann, und zwar durch Herstellung bei niedrigen Temperaturen, vorzugsweise unter 500°C.

Das Halbleitermaterial kann auf bekannte Weise hergestellt werden, z.B. durch Niederschlagen bei normalem Druck ("Chemical Vapor Deposition", CVP) oder durch Niederschlagen bei niedrigem Druck ("Low Pressure Chemical Vapor Deposition", LPCVP) mit oder ohne Gasentladung. Möglich ist auch Aufdampfen im Vakuum bei einem niedrigen Wasserstoff-Partialdruck oder Zerstäben in einer Wasserstoffatmosphäre.

In einer Gasentladung hergestellte Schichten amorphen Siliziums haben sich als sehr geeignet erwiesen. Von praktischer Bedeutung können auch Schichten aus amorphen Silizium sein, die durch Niederschlagen aus Silanen höherer Ordnung, z.B. $Si_2H_6$, hergestellt werden,

die weniger Wasserstoff enthalten als Schichten, die durch Gasentladung hergestellt werden.

Das Halbleiterelement arbeitet hierbei in einem Zustand, in welchem mindestens für einen Teil des durch die angelegte Spannung bestimmten Arbeitsbereiches der Strom vorwiegend aus dem Transport von Ladungsträgern über eine im Innern des Halbleiterkörpers vorhandene Potentialbarriere besteht, und in welchem kein Tunneleffekt und kein Lawinendurchschlag auftritt. Die Potentialbarriere entsteht durch Verarmung der Konzentration der beweglichen Ladungsträger in einem die Raumladungszone darstellenden Teil des Halbleiterkörpers zufolge Anwesenheit einer Inhomogenität, z.B. eines pn-Uebergangs.

Für das vorliegende Halbleiterelement sind Anordnungen geeignet, die bei Halbleiterelementen aus einkristallinen Halbleitern, insbesondere aus Silizium, bekannt sind, beispielsweise die bekannte BARRIT-Diode sowie pnp- und npn-Transistoren mit schmaler Basis (Hochfrequenz-Transistoren), bei welchen ein Punch-Through-Effekt auftritt. Es kann auch eine Schottky-Diode mit der Struktur Metall-Halbleiter-Metall (DMS) sein oder die Aneinanderreihung zweier Strukturen Metall-Isolator-Halbleiter (MIS) sein, d.h. eine Struktur MISIM. Auch Hetero-Uebergänge sind geeignet, z.B. Indium-Zinnoxid (ITO) und amorphes Silizium, oder der Aufbau von amorphem, mit Wasserstoff angereichertem Siliziumkarbid vom p-Typ, hierauf amorphem, undotiertem Silizium und dann amorphem, mit Wasserstoff angereichertem Siliziumkarbid vom p-Typ. Besonders interessant sind Strukturen mit einem eigenleitenden oder nahezu eigenleitenden Teil, also Strukturen wie pip oder pinip. Des weiteren sind Schottky-Dioden mit durch eine hochdotierte Oberflächenschicht bestimmter Barriere (sog. Camel-Dioden) geeignet. Im allgemeinen werden Halbleiterelemente mit pn-Uebergängen oder einer pip- oder MpipM-Struktur bevorzugt, insbesonder mit sehr dünner p-Schicht und Metallschicht M mit sehr hoher Austrittsarbeit (z.B. Platin), weil sich mit solchen Strukturen eine symmetrische Strom-Spannungskennlinie leichter erzielen lässt. Es ist dabei für alle Strukturen wichtig, dass sich die Raumladungszone mindestens für einen Teil der Arbeitsspannung über die ganze mittlere Schicht der Struktur erstreckt.

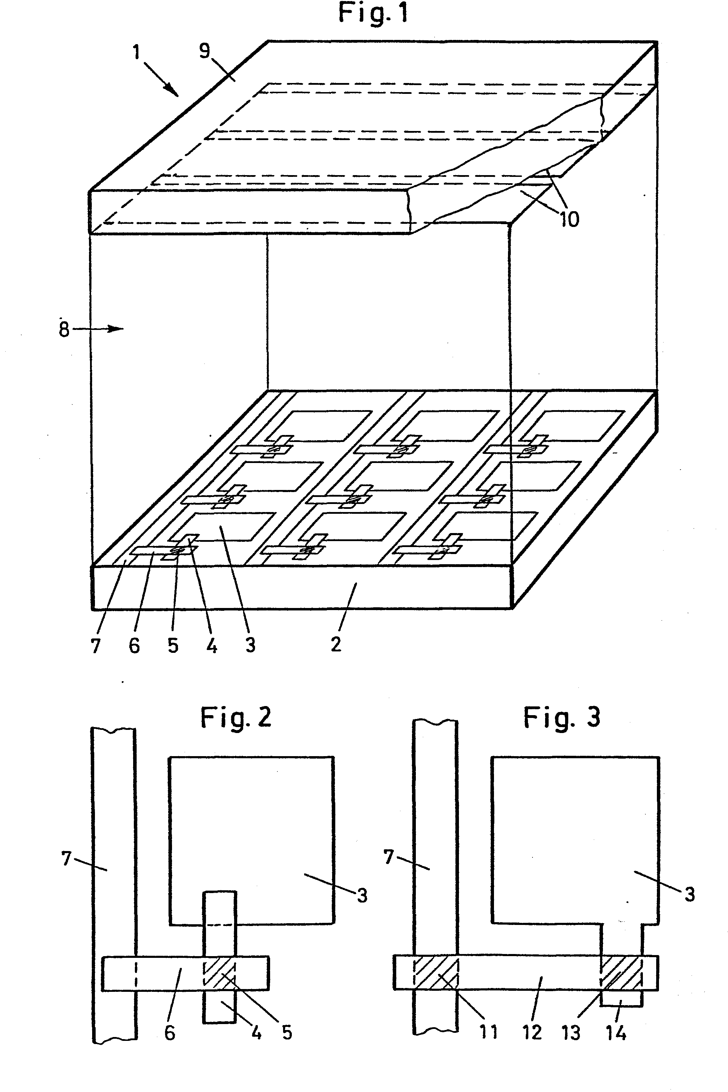

Die perspektivische Ansicht der Fig. 1 zeigt schematisch einen wesentlichen Teil einer Flüssigkristall-Anzeigeeinrichtung, deren Polarisatoren, Reflektoren, Filter und Randabdichtungen nicht dargestellt sind und die zusammen mit zur Steuerung von Segmenten der Anzeigeeinrichtung vorgesehenen Halbleiterelementen in Sandwich-Bauweise integrierend zusammengebaut sind. Die demnach in ihrer Gesamtheit plattenförmige Anordnung 1 umfasst ein Substrat 2, beispielsweise eine Glasplatte, welche mit einer ersten Gruppe von Segmentelektroden 3 versehen ist, die beispielsweise aus Indium-Zinnoxid (ITO) bestehen. Auf die Segmentelektroden 3 sind erste Elementelektroden 4 aufgebracht, die beispielsweise aus Chrom bestehen und die mit den Segmentelektroden 3 in elektrischem Kontakt stehen (vgl. auch Fig. 2). Auf den Elementelektroden 4 sind Halbleiterelemente 5 der vorgängig beschriebenen Art angebracht. Die Halbleiterelemente 5 sind mit zweiten, darüberliegendenden Elementelektroden 6 versehen, welche mittels Adressen- oder Zeilenleitungen 7 in Gruppen miteinander verbunden sind. Die zweiten Elementelektroden 6 und die Adressenleitungen 7 bestehen beispielsweise aus Aluminium oder aus Chrom.

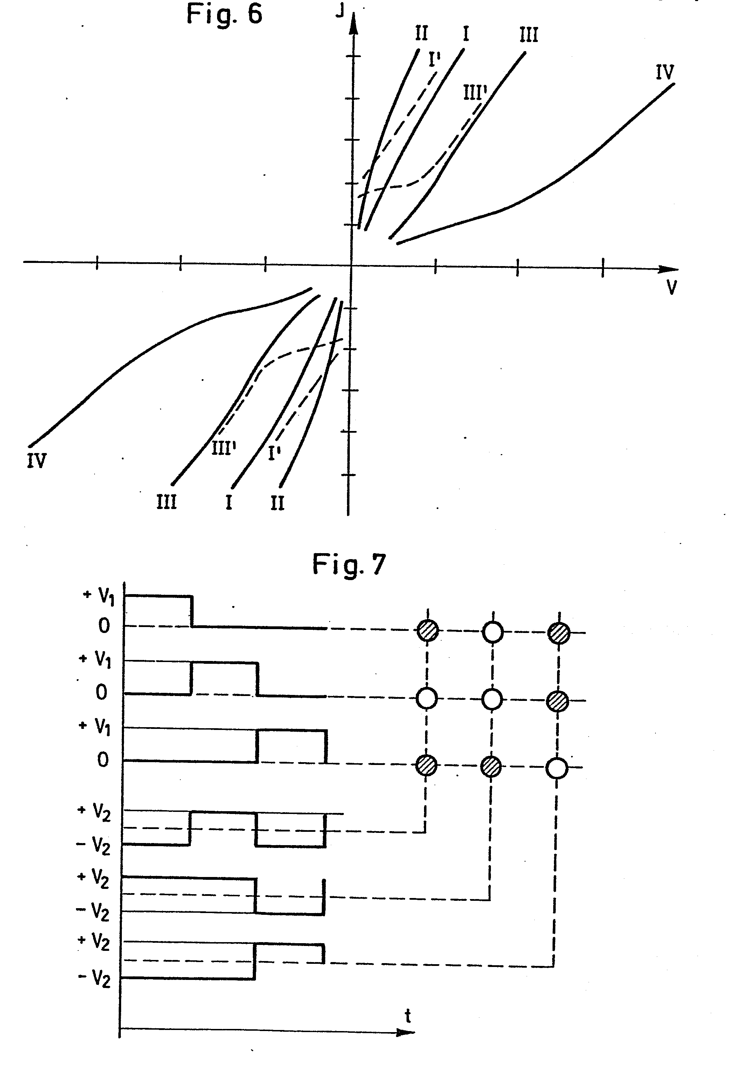

Im dargestellten Schichtaufbau der Anordnung folgt hierauf das vorgesehene, hier nicht weiter zu erläuternde Flüssigkristallmaterial 8, welches von einem weiteren Substrat 9, das transparent ist und ebenfalls eine Glasplatte sein kann, abgeschlossen ist. Das Substrat 9 ist auf seiner dem Flüssigkeitsmaterial 8 zugewandten Seite mit einer zweiten Gruppe bandförmiger, transparenter Segmentelektroden 10 versehen, welche sich quer zu den Adressenleitungen 7 erstrecken und beispielsweise aus Indium-Zinnoxid (ITO) bestehen. Es ist ersichtlich, dass die Elementelektroden 4 nicht nur die einen Elektroden der Halbleiterelemente 5 bilden, sondern zufolge ihrer direkten Verbindung mit den Segmentelektroden 3 auch die einzeln ansteuerbaren Segmente oder Punkte der Flüssigkristall-Anzeigeeinrichtung, die mittels anhand der Fig. 7 noch erläuterten Multiplex-Steuerung der Halbleiterelemente 5 und der Segmentelektroden 10 einzeln durch das Substrat hindurch sichtbar gemacht werden können. Hierbei kann jede Segmentelektrode 10 auch aus mehreren, zum Beispiel mindestens drei, parallelen Streifen bestehen.

In Fig. 2 ist ein einzelnes Halbleiterelement 5, aufgebracht auf eine Elementelektrode 4, die an eine Segmentelektrode 3 angeschlossen ist, und versehen mit einer oberen Elementelektrode 6, die an eine Adressen- oder Zeilenleitung 7 angeschlossen ist, in Draufsicht dargestellt.

Fig. 3 zeigt eine Variante, bei welcher das Halbleiterelement durch zwei in Reihe geschaltete Basishalbleiterelemente gebildet ist. Ein erstes Basishalbleiterelement 11 ist auf die Adressenleitung 7 aufgebracht, welche demnach mit dem betreffenden Leitungsabschnitt die zweite Elementelektrode des ersten Basishalbleiterelements 11 bildet und gleichzeitig für den gemeinsamen Anschluss der zweiten Elementelektroden aller weiteren ersten Basiselemente an die Adressenleitung 7 sorgt. Ein streifenförmiger, sich quer zur Adressenleitung 7 erstreckender Leiter 12, der auch die gut leitende, hochdotierte Halbleiterschicht sein kann, bildet mit seinem einen Endbereich die erste Elementelektrode des ersten Basishalbleiterelementes 11 und mit seinem anderen Endbereich die zweite Elementelektrode eines zweiten Basishalbleiterelementes 13. Das letztere ist auf einen Finger 14 der ersten Segmentelektrode 3 aufgebracht, welcher Finger demnach die erste Elementelektrode des zweiten Basishalbleiterelementes 13 bildet.

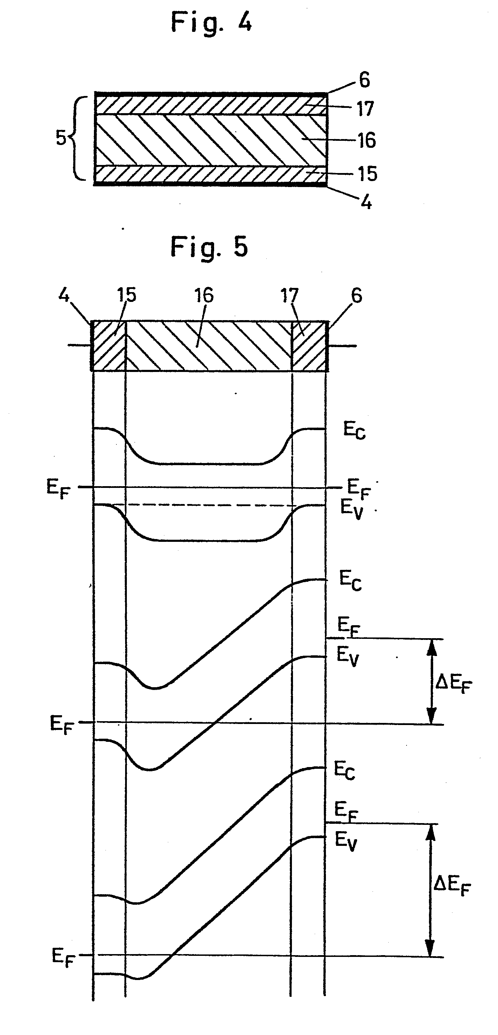

Wie in Fig. 4 dargestellt, kann das Halbleiterelement 5 einschliesslich seiner Elektroden 4 und 6 eine Sandwich-Struktur mit abwechselnden Schichten haben, beispielsweise einer p-leitenden Schicht 15, einer n-leitenden Schicht 16 und einer p-leitenden Schicht 17. Statt dessen kann das Halbleiterelement in an sich bei Feldeffekt-Transistoren, insbesondere MOSFET, bekannter Weise eine laterale Struktur aufweisen, wobei die Kanallänge und Dotierung so klein bzw. niedrig sind, dass es für bestimmte Source-Drainspannungen zum Punch-Through-Effekt kommt. Die Potentialbarriere kann durch Anlegen einer Spannung an eine dritte Elektrode beeinflusst werden.

In Fig. 5 ist ein Diagramm der Energiebänder des aktiven Halbleiterelementes der Fig. 4 für verschiedene angelegte Spannungen dargestellt, wobei das dargestellte Diagramm auch für ein anderes Halbleiterelement, z.B. dasjenige mit lateraler Struktur Gültigkeit hat. Hierin bedeuten in an sich bekannter Weise $E_C$ die Grenze des Leitungsbandes, $E_F$ das Fermi-Niveau und $E_V$ die obere Grenze des Valenzbandes. Das oberste Diagramm stellt das Halbleiterelement im thermischen Gleichgewicht dar. Im mittleren Diagramm ist der Zustand bei einer angelegten Spannung dargestellt, welche der vorgängig erwähnten Schwellenspannung entspricht. Hierin erreicht die Differenz $\Delta E_F$ der Fermi-Niveaus das Material der Elementelektroden einen kritischen Wert, welcher den Punch-Through-Effekt zur Folge hat, so dass ein Strom durch das Halbleiterelement zu fliessen beginnt. Bei noch höherer angelegter Spannung und grösserer Differenz $\Delta E_F$ der Fermi-Niveaus wir die Energiebarriere (Potentialbarriere) für die Ladungsträger, deren Transport über die Barriere für den durch das Halbleiterelement fliessenden Strom entscheiden ist, kleiner, so dass der durch das Halbleiterelement fliessende Strom steil ansteigt.

Nachstehend werden einige Beispiel der Herstellung der vorliegenden Steuerungseinrichtung beschrieben, wobei auf die Ausführungsform der Fig. 1,2 und 3 verwiesen wird.

Zur Herstellung einer Steuerungseinrichtung nach den Fig. 1 und 2 werden mit Hilfe eines bekannten fotolithographischen Verfahrens auf eine mit einer transparenten leitenden Schicht bedeckten Glasplatte vom Typ Corning 7059 durch Aetzen erster Segmentelektroden 3, eventuell zusammen mit Adressenleitungen 7, festgelegt. Im Vakuum werden Chrom-Elementelektroden 4 oder 6 aufgedampft und im gleichen Arbeitsschritt durch Anwendung der bekannten "Lift off"-Technik (ausrichten, justieren) festgelegt.

Hierauf wird über die ganze Oberfläche des Substrates mit den Chrom-Elementelektroden 4 oder 6, den Segmentelektroden 3 und eventuell den Adressenleitungen 7 eine Gesamtschicht aus amorphem, mit Wasserstoff angereichertem Silizium aufgebracht, wobei sich die Gesamtschicht aus mehreren aneinandergrenzenden Einzelschichten unterschiedlicher Dicke und Dotierung zusammensetzt. Das Aufbringen der einzelnen Schichten erfolgt in einem Vakuumsystem mit Hilfe einer Niederdruck-Glimmentladung durch Zersetzen von Silan ($SiH_4$) oder einem Gemisch von Silan ($SiH_4$) und Diboran ($B_2H_6$) oder einem Gemisch von Silan ($SiH_4$) und Phosphin ($PH_3$), je nach der gewünschten Dotierung der betreffenden einzelnen Schicht. Die Temperatur des Substrates 2 wird in einem Bereich von 250 bis 300°C gehalten, vorzugsweise auf einem Wert von 270°C. Der Gasdruck kann in einem Bereich von 0,3 bis 1 mbar liegen, vorzugsweise bei 0,4 mbar, bei einer Gaszufuhr von etwa 50 $cm^2$/ min. Die Hochfrequenzleistung kann bis 10 W betragen und liegt vorzugsweise bei 7 W mit einer Plasmaerzeugungsfrequenz von 13,56 MHz. Hierbei beträgt die Oberfläche jeder der parallel angeordneten Elektroden beispielsweise 70 $cm^2$ bei einem eingestellten Elektrodenabstand von beispielsweise 2,5 cm. Die Dicken der einzelnen Schichten, aus denen sich die gesamte amorphe, mit Wasserstoff angereicherte Halbleiterschicht zusammensetzt, sind durch die zeitliche Dauer des Niederschlagens aus dem für die jeweilige Einzelschicht entsprechenden Gemisch bestimmt. Das Aendern der Dotierung erfolgt durch Wechseln des Gemisches beim Niederschlagen.

In einem konkreten Beispiel wird zuerst eine etwa 300 $\overset{o}{A}$ dicke Schicht, bestehend aus n-dotiertem amorphem, mit Wasserstoff angereichertem Silizium, aus einem Gasgemisch von 1 % $PH_3$ in $SiH_4$ unter den oben genannten Herstellungsbedingungen niedergeschlagen. Auf diese erste Schicht wird hierauf eine etwa 2000 $\overset{o}{A}$ dicke eigenleitende Schicht, bestehend aus nicht-dotiertem amorphem, mit Wasserstoff angereichertem Silizium, aus $SiH_4$ niedergeschlagen. Dann folgt das Niederschlagen einer dritten, etwa 200 $\overset{o}{A}$ dicken Schicht, bestehend aus leicht-dotiertem amorphem, mit Wasserstoff angereichertem Silizium, aus $SiH_4$ niedergeschlagen. Dann folgt das Niederschlagen einer dritten, etwa 200 $\overset{o}{A}$ dicken Schicht, bestehend aus leicht p-dotiertem amorphen, mit Wasserstoff angereichertem Silizium, aus einem Gasgemisch von etwa 100 ppm $B_2H_6$ in $SiH_4$. Als vierte Schicht wird wiederum eine eigenleitende, etwa 2000 $\overset{o}{A}$ dicke Schicht aus nicht-dotiertem amorphem, mit Wasserstoff angereichertem Silizium durch Niederschlagen aus $SiH_4$ niedergeschlagen. Schliesslich wird eine weitere, etwa 300 $\overset{o}{A}$ dicke, aus n-dotiertem amorphen, mit Wasserstoff angereichertem Silizium bestehende Schicht durch Niederschlagen aus einem Gasgemisch von 1 % $PH_3$ in $SiH_4$ aufgebracht.

Hierauf wird mit Hilfe eines fotolithographischen Verfahrens und Ausrichtens ein überschüssiger Teil dieser amorphen, mit Wasserstoff angereicherten Schichtstruktur mit einem bekannten Silizium-Aetzmittel weggeätzt, um die in Fig. 1 und 2 dargestellte Flächenbedeckung der Elementelektroden 4 oder 6 durch den Halbleiterkörperteil des Halbleiterelements 5 zu erhalten. Das Aetzmittel kann beispielsweise das als CP4 bekannte Gemisch von
15 cm$^3$ HF (40 %) + 15 cm$^3$ CH$_3$COOH (96 %) + 25 cm$^3$ HNO$_3$
(60 %) + 0,5 ml Brom auf 100 ml Aetzlösung sein.

Schliesslich werden wieder mit Hilfe eines fotolithographischen Verfahrens und der bekannten "Lift off"-
Technik sowie durch Aufdampfen, z.B. von Chrom oder Aluminium, im Vakuum die Elementelektroden 6 oder 4 hergestellt, gegebenenfalls mit den Adressenleitungen 7, wenn
diese nicht schon zu Beginn festgelegt worden waren.

Die Oberflächen der aktiven Halbleiterelemente
5, d.h. der amorphen, mit Wasserstoff angereicherten
Schichtstrukturen sollen bezüglich ihrer Ausdehnung bestimmte Bedingungen erfüllen. Insbesondere soll die Kapazität jedes aktiven Halbleiterelementes erheblich kleiner,
d.h. etwa zehnmal kleiner sein, als die Kapazität des
zugeordneten Flüssigkristall-Segmentes. Andererseits muss
die Kapazität jedes aktiven Halbleiterelementes ausreichend gross sein, um die Kapazität des zugeordneten
Flüssigkristall-Segmentes während dem im Multiplex-Betrieb
zur Verfügung stehenden Zeilenzeitintervall auf die
Spannung aufzuladen, die erforderlich ist, um das Flüssigkristall-Segment in den Einschaltzustand zu bringen. Zu
gross darf die Oberfläche des aktiven Halbleiterelementes
aber auch deshalb nicht sein, weil der Leckstrom des zugeordneten Flüssigkristall-Segmentes grösser sein soll
als derjenige des zugeordneten aktiven Halbleiterelementes,
damit sich das Flüssigkristall-Segment über eigene Parallelwiderstände entlädt und nicht über das aktive Halbleiterelement.

Zur Herstellung einer Steuerungseinrichtung gemäss Fig. 3 werden im Vakuum auf eine Glasplatte vom Typ
Corning 7059 erste Segmentelektroden 3 und Adressenleitungen 7 aus Chrom aufgedampft, zur Bestimmung der Form
und der Abmessungen der Elektroden und Leitungen von bekannten fotolithographischen Verfahren und zum Beispiel
der "Lift-off"-Technik Gebrauch gemacht wird.

Hierauf wird über die ganze Oberfläche des Substrats mit den Chromelektroden eine Gesamtschicht aus amorphem, mit Wasserstoff angereichertem Silizium aufgebracht, wobei diese Gesamtschicht in der vorgängig beschriebenen Weise durch Zersetzen von $SiH_4$ in einer Glimmentladung in aneinandergrenzenden Einzelschichten erzeugt wird.

Dann wird mit Hilfe eines nächsten, justierenden Schrittes des fotolithographischen Verfahrens unter Benutzung der "Lift off"-Technik die obere Chrom-Verbindungselektrode 12 der zwei in Reihe geschalteten Basishalbleiterelemente 11 und 13 festgelegt, welche beim darauffolgenden Schritt als Maske beim Wegätzen des überschüssigen Teils des Halbleitermaterials dient. Dabei ist darauf zu achten, dass die Oberfläche des, in Projektion gesehen, überlappenden Teils mit der Segmentelektrode 3 (bzw. deren Finger 14) gleich ist der Oberfläche des überlappenden Teils mit der Adressenleitung 7. Auf diese Weise wird dann der durch die in Reihe geschalteten Basishalbleiterelemente 11 und 13 fliessende Strom vorwiegend durch die Oberflächen der überlappenden Teile, welche die aktiven Teile der Basishalbleiterelemente darstellen, bestimmt. Dies kommt durch die geringe Leitfähigkeit bzw. den hohen Schichtwiderstand der Einzelschichten zustande. Der laterale Strom muss für kleine Spannungen von gleicher Grössenordnung oder kleiner als der Sperrstrom der Basishalbleiterelemente sein.

Nachstehend sind einige Beispiele I bis IV von Halbleiterelementen mit unterschiedlichen Strukturen angegeben, wobei das Beispiel I mit dem ersten vorgängig beschriebenen Beispiel zur Herstellung einer Steuerungseinrichtung gemäss Fig. 1 und 2 übereinstimmt und sich das Beispiel IV auf das zweite, vorgängig beschriebene Beispiel zur Herstellung einer Steuerungseinrichtung gemäss Fig. 3 bezieht. Die Angaben sind hierbei für jede der Schichten des Halbleiterkörpers in der Reihenfolge Schichtdicke, Leitfähigkeitstyp und, in Klammern, Zusammensetzung des Gases bzw. Gasgemisches, aus welchem das Niederschlagen erfolgt, gemacht. Die Schichtdicken sind nur angenähert angegeben, da es sehr schwierig ist, Schichtdicken von einigen hundert Angström oder weniger genau zu bestimmen.

I. $\sim$ 300 $\overset{\circ}{A}$ $n^+$ (1 % $PH_3$ in $SiH_4$) +
   $\sim$ 2000 $\overset{\circ}{A}$ i (SiH$_4$) +
   $\sim$ 200 $\overset{\circ}{A}$ p (100 ppm $B_2H_6$ in $SiH_4$) +
   $\sim$ 2000 $\overset{\circ}{A}$ i (SiH$_4$) +
   $\sim$ 300 $\overset{\circ}{A}$ n+ (1 % $PH_3$ in $SiH_4$)

II. $\sim$ 300 $\overset{\circ}{A}$ $n^+$ (1 % $PH_3$ in $SiH_4$) +
   $\sim$ 1500 $\overset{\circ}{A}$ i (SiH$_4$) +
   $\sim$ 75 $\overset{\circ}{A}$ p (100 ppm $B_2H_6$ in $SiH_4$) +
   $\sim$ 1500 $\overset{\circ}{A}$ i (SiH$_4$) +
   $\sim$ 300 $\overset{\circ}{A}$ $n^+$ (1 % $PH_3$ in $SiH_4$)

III. $\sim$ 300 $\overset{\circ}{A}$ $n^+$ (1 % $PH_3$ in $SiH_4$) +
   $\sim$ 600 $\overset{\circ}{A}$ p (100 ppm $B_2H_6$ in $SiH_4$) +
   $\sim$ 300 $\overset{\circ}{A}$ $n^+$ (1 % $PH_3$ in $SiH_4$)

IV. $\sim$ 200 $\overset{\circ}{A}$ p (0,2 % $B_2H_6$ in $SiH_4$) +
   $\sim$ 1500 $\overset{\circ}{A}$ i (SiH$_4$) +
   $\sim$ 100 $\overset{\circ}{A}$ n (100 ppm $PH_3$ in $SiH_4$) +
   $\sim$ 1500 $\overset{\circ}{A}$ i (SiH$_4$) +
   $\sim$ 200 $\overset{\circ}{A}$ p (0,2 % $B_2H_6$ in $SiH_4$)

Für die Beispiele I bis III bestehen die unteren Elementelektroden 4 oder 6 in Fig. 1 aus Chrom und die oberen Elementelektroden 6 oder 4 aus Aluminium. Für das Beispiel IV bestehen die unteren und die oberen Elementelektroden 12,14 aus Chrom. Beim Beispiel IV kann die mittlere n-Schicht auch in Wegfall kommen, wobei dann zwischen den beiden p-Schichten eine i-Schicht aus $SiH_4$ mit einer Dicke von etwa 1 μm liegt.

In Fig. 6 sind die Strom-Spannungskennlinien für die obenstehenden vier Beispiele I bis IV von aktiven Halbleiterelementen dargestellt. Auf der Abszisse ist die am jeweiligen Halbleiterelement angelegte Spannung V in Volt aufgetragen, auf der Ordinate in logarithmischem Massstab die zugehörige Stromdichte J in A/cm$^2$. Es ist ersichtlich, dass die Kennlinien mindestens angenähert symmetrisch sind, und dass insbesondere die Kennlinien der Beispiele I bis III eine grosse Steilheit aufweisen. Im Beispiel IV ist deutlich das Vorliegen einer Schwellenspannung zu sehen, die bei etwa 2 V liegt. Im Beispiel III ist weniger deutlich eine Schwellenspannung zu sehen, die bei etwa 0,6 V liegt. Wegen ihres kleinen Spannungsbereiches eignen sich die Beispiele I bis III vor allem zur Steuerung von Flüssigkristall-Anzeigeeinrichtungen, die ein nematisches Flüssigkristallmaterial mit Schraubenlinienstruktur haben. Das Beispiel IV, insbesondere ohne n-Schicht, eignet sich dagegen vor allem zur Steuerung von Flüssigkristall-Anzeigeeinrichtungen, deren Flüssigkristallmaterial zur "Guest-Host"-Gruppe gehört und mit einer höheren Spannung angeregt werden muss. Im übrigen sind in Fig. 6 mit gestrichelten Linien die Kennlinien I' und III' dargestellt, die sich auf die Beispiele I und III mit Halbleiterelementen in beleuchtetem Zustand beziehen.

Anhand der Fig. 7 wird nachstehend das an sich bekannte Multiplex-Steuerverfahren von Flüssigkristall-Segmenten mittels in Reihe geschalteter aktiver Halbleiterelemente erläutert. Hierbei ist die Matrix der Flüssigkristall-Segmente durch Kreise angedeutet, die für den Einschaltzustand ausgefüllt und für den Ausschaltzustand leer dargestellt sind. Die horizontalen Linien oder Zeilen stellen z.B. die Adressenleitungen 7 mit den Elementelektroden 6 in Fig. 1 und die vertikalen Linien oder Kolonnen die Segmentelektroden 10 bzw. Datenleitungen 10 in Fig. 1 dar. An jede Zeile, d.h. jede Adressenleitung 7, ist hintereinander eine Spannung $+V_1$ als Abtastspannung

während eines bestimmten zeitlichen Intervalls gelegt. An jede Kolonne, d.h. jede Datenleitung 10, ist in etwa den gleichen zeitlichen Intervallen eine Datenspannung $-V_2$ für den Einschaltzustand bzw. $+V_2$ für den Ausschaltzustand gelegt, wobei Datenspannung der zur Anzeige zu gelangenden Information entspricht. Es ist ersichtlich, dass jeweils dann ein Flüssigkristallsegment angeregt wird, wenn in der Zeile des betreffenden Segmentes die Spannung $+V_1$ und in der Kolonne des betreffenden Segmentes die Spannung $-V_2$ vorliegt. Nach dem Abtasten aller Zeilen beginnt der Abtastvorgang erneut in der ersten Zeile, jedoch vorzugsweise mit umgekehrter Polarität der Spannungen $V_1$ und $V_2$, um durch eine derartige wechselstromähnliche Anregung der Flüssigkristall-Segmente deren vorzeitige Alterung zu vermeiden. Es kann von Vorteil sein, die Polarität der Spannungen $V_1$ und $V_2$ erst nach mehreren vollständigen Abtastvorgängen umzulenken.

Zur Illustration wird nachstehend ein Zahlenbeispiel angeführt. Es sei angenommen, dass die Flüssigkristall-Anzeigeeinrichtung, deren Flüssigkristallmaterial nematisch ist und Schraubenlinienstruktur hat, eine Matrix von 32 mal 32 Flüssigkristall-Segmenten aufweist, die eine Fläche von 1 mm mal 1 mm ($10^{-2}$ cm$^2$) haben. Die Sättigungsspannung jedes Segmentes betrage 3 V und die Ansprechspannung 1 V, d.h. die Ausschaltspannung weniger als 1 V. Ferner sei angenommen, dass die Abtastzeit für die ganze Matrix 10 ms betrage, d.h. die Abtastzeit für eine Zeile etwas mehr als 300 µs. Die Abtastspannung $V_1$ (Fig. 7) betrage 3 V und die Datenspannung $V_2$ betrage $\pm$ 1,5 V, die totale Steuerspannung demnach 4,5 V.

Bezüglich der Halbleiterelemente 5 (Fig. 1) wird angenommen, dass diese eine Struktur gemäss dem vorerwähnten Beispiel I haben und eine Oberfläche von $10^{-5}$ cm$^2$ aufweisen.

Liegt die genannte totale Steuerspannung von 4,5 V nun zwischen einer Adressenleitung 7 und einer der Segmentelektroden 10 (Datenleitungen), so kann das
betreffende Halbleiterelement 5 das zugehörige Flüssigkristall-Segment auf die Sättigungsspannung von 3 V aufladen, wobei über dem aktiven Halbleiterelement eine
Spannung von 1,5 V bleibt. Bei dieser Spannung kann ein
Halbleiterelement mit der Struktur gemäss Beispiel I und
einer Oberfläche mit $10^{-5}$ $cm^2$ gemäss der Kennlinie I
in Fig. 6 einen Strom von etwa $5 \cdot 10^{-7}$ A liefern. Es lässt
sich ohne weiteres berechnen, dass mit diesem Strom die
Kapazität des Flüssigkristall-Segmentes die etwa 10 pF
beträgt, auf 3 V aufgeladen wird in einer wesentlich
kürzeren Zeit als die Zeilenabtastzeit von 300 µs. Unter
den gleichen Voraussetzungen kann sogar eine Matrix mit
512 mal 512 Flüssigkristall-Segmenten gesteuert werden.

Auf ähnliche Weise kann auch gezeigt werden,
dass im Falle nicht angesteuerter Flüssigkristall-Segmente,
für welche unter ungünstigsten Verhältnissen die totale
Spannung 1,5 V beträgt, die über den aktiven Halbleiterelementen liegende gegen 0,5 V sinkt, was gemäss der
Kennlinie I der Fig. 5 einen Strom von weniger als $10^{-10}$ A
ergibt. Dieser Strom ist kleiner als der Leckstrom des
Flüssigkristall-Segmentes, so dass die Spannung an diesem
kleiner als 1 V ist und das Flüssigkristall-Segment demnach ausgeschaltet ist.

Die Anzeigeeinrichtung kann auch eine Steuerungseinrichtung enthalten, die dazu ausgebildet ist, eine auf
ihre Halbleiterelemente fallende, elektromagnetische
Strahlung, welche zweidimensionale Bildmuster enthält,
aufzunehmen und durch Einspeisung von elektrischen Signalen
in die Adressen- und Datenleitungen zu modulieren.

Insbesondere können die zweiten Segmentelektroden miteinander verbunden sein und auch die an die Adressenleitungen angeschlossenen Elementelektroden der Halbleiterelemente als eine Elektrode ausgebildet sein, wobei
diese beiden Elektroden grossflächig ausgebildet und an
eine Wechselspannungsquelle angeschlossen sind.

Somit sind die beschriebenen Halbleiterelemente einfach und kostengünstig in integrierter Bauweise herstellbare Steuerelemente mit vorteilhaften Kennlinien für die in Matrixform ausgebildeten Segmente einer Flüssigkristall-Anzeigeeinrichtung.

Die beschriebenen Halbleiterelemente lassen sich ebenfalls zur Umsetzung einer elektromagnetischen Strahlung, die eine Bildmusterinformation enthält, in elektrische Signale mit zugeordneten Koordinaten verwenden. Bei einer solchen Verwendung sind die ersten Elementelektroden der Halbleiterelemente in Gruppen an mit Anschlussorganen versehene Datenleitungen angeschlossen, während die zweiten Elementelektroden der Halbleiterelemente in der bereits beschriebenen Weise mit Adressenleitungen, die ebenfalls Anschlussorgane haben, in elektrischer Verbindung stehen. Beim Abtasten der einzelnen Halbleiterelemente durch Anlegen von Spannungen an die Anschlussorgane der Datenleitungen und der Adressenleitungen ist der durch das jeweils adressierte Halbleiterelement fliessende elektrische Strom eine Funktion der auf das betreffende Halbleiterelement fallenden elektromagnetischen Strahlung, welche durch Absorption Ladungsträger im Halbleiterelement freisetzt. Dadurch wird die auf die Halbleiterelemente auftreffende Bildinformation der elektromagnetischen Strahlung in elektrische Signale mit durch die an Daten- und Adressenleitungen gelegten Spannungen zugeordneten Koordinaten umgesetzt.

Zweckmässigerweise ist die Elementelektrode jedes Halbleiterelementes, durch welche die elektromagnetische Strahlung in das Halbleiterelement eintritt, für diese Strahlung durchlässig. Die Datenleitungen und die Adressenleitungen sind vorzugsweise streifenförmig ausgebildet, wobei die sich, in Projektion gesehen, überlappenden Teile der Datenleitungen und der dazu querliegenden Adressenleitungen die aktiven Teile der einzelnen Halbleiterelemente bestimmen.

Patentansprüche
--------------------------------

1. Steuerungseinrichtung zum Steuern einer feldempfindlichen Anzeigeeinrichtung mittels Halbleiterelementen zwecks Darstellung einer eingehenden Information, welche Steuerungseinrichtung aus einer Anzahl von mit mindestens zwei Elementelektroden versehenen Halbleiterelementen besteht, deren ersten Elementelektroden an Segmentelektroden der Anzeigeeinrichtung angeschlossen sind und sich auf einer Oberfläche eines Substrates befinden, und deren zweiten Elementelektroden mit Hilfe einer Anzahl von Adressenleitungen in Gruppen elektrisch miteinander verbunden sind, wobei der durch jedes Halbleiterelement an die angeschlossene Segmentelektrode gelieferte Strom zum Aufbau eines elektrischen Feldes in einem feldempfindlichen, in Wechselwirkung mit den Segmentelektroden stehenden Medium der Anzeigeeinrichtung dient, dadurch gekennzeichnet, dass in jedem Halbleiterelement als Folge eines Punch-Through-Effektes bei einer bestimmten, an die Elementelektroden des Halbleiterelementes angelegten Spannung eine an freien Ladungsträgern verarmte Raumladungszone vorliegt, in deren Innern eine Potentialbarriere liegt, deren Höhe oberhalb der bestimmten Spannung von der an den Elementelektroden liegenden Spannung abhängt, wobei der durch das Halbleiterelement fliessende Strom eine Funktion der Höhe der Potentialbarriere und der Konzentration der freien Ladungsträger ist, welche durch eine äussere Einwirkung im Halbleiterelement freigemacht sind, und dass die Halbleiterkörper der Halbleiterelemente eine Dünnschichtstruktur von mehreren aneinandergrenzenden, dünnen Halbleitermaterialschichten abwechselnd unterschiedlichen Leitungstyps aufweisen, wobei die Ladung der Raumladungszone und der Verlauf des elektrischen Potentials, und dadurch der Potentialbarriere, sowohl durch die Konzentration der Dotierungsstoffatome als auch durch die Konzentration von Trapzentren, das heisst von tief im verbotenen Rand liegenden Störstellen, bestimmt sind.

2. Steuerungseinrichtung nach Anspruch 1, dadurch gekennzeichnet, dass mindestens ein Teil der Segmentelektroden zugleich als erste Elementelektroden dienen.

3. Steuerungseinrichtung nach Anspruch 1 oder 2, dadurch gekennzeichnet, dass mindestens ein Teil der Adressenleitungen gleichzeitig als zweite Elementelektroden dienen.

4. Steuerungseinrichtung nach einem der Ansprüche 1 bis 3, dadurch gekennzeichnet, dass die Halbleiterelemente und die Segmentelektroden matrixförmig angeordnet sind, dass alle Halbleiterelemente bzw. alle Segmentelektroden unter sich angenähert die gleiche Form haben, und dass die Halbleiterelemente bzw. die Segmentelektroden in jeweils einer Richtung in angenähert gleichen Abständen angeordnet sind, wobei je eine der Adressenleitungen eine Reihe von Halbleiterelementen elektrisch verbindet und ein Anschlussorgan aufweist.

5. Steuerungseinrichtung nach einem der Ansprüche 1 bis 4, dadurch gekennzeichnet, dass der durch die Halbleiterelemente zu den Segmentelektroden fliessende Strom überwiegend durch die Oberflächen der sich, in Projektion gesehen, überlappenden Teile der Elementelektroden bestimmt ist.

6. Steuerungseinrichtung nach einem der Ansprüche 1 bis 5, dadurch gekennzeichnet, dass die Halbleiterkörper der in einer Reihe verbundenen Halbleiterelemente sich als schmale Streifen auf den Adressenleitungen befinden, wobei der überlappende Teil mit der ersten Elementelektrode jedes einzelnen Halbleiterelementes angenähert den aktiven Teil dieses Halbleiterelementes bildet.

7. Steuerungseinrichtung nach einem der Ansprüche 1 bis 6, dadurch gekennzeichnet, dass jedes Halbleiterelement aus zwei identisch ausgebildeten Basishalbleiterelementen besteht, wobei die erste Elementelektrode des ersten Basishalbleiterelementes, dessen
zweite Elementelektrode mit der Adressenleitung verbunden
ist, mit der zweiten Elementelektrode des zweiten Basishalbleiterelementes verbunden ist, dessen erste Elementelektrode mit einer der Segmentelektroden verbunden ist.

8. Steuerungseinrichtung nach einem der Ansprüche 1 bis 7, dadurch gekennzeichnet, dass ein Teil
des Halbleiterkörpers jedes Halbleiterelementes undotiert
ist.

9. Steuerungseinrichtung nach einem der Ansprüche 1 bis 8, dadurch gekennzeichnet, dass mindestens
in einem Teil jedes Halbleiterelementes die Konzentration
an Trapzentren höher ist als im restlichen Teil.

10. Steuerungseinrichtung nach einem der Ansprüche 1 bis 9, dadurch gekennzeichnet, dass der eine
Leitungstyp n oder n+ und der andere Leitungstyp p oder p+
ist.

11. Steuerungseinrichtung nach einem der Ansprüche 1 bis 9, dadurch gekennzeichnet, dass mindestens
eine der Elementelektroden jedes Halbleiterelementes mit
dem angrenzenden Halbleitermaterial eine Schottky-Diode
bildet.

12. Steuerungseinrichtung nach einem der Ansprüche 1 bis 9, dadurch gekennzeichnet, dass mindestens
eine der Elementelektroden jedes Halbleiterelementes mit
dem angrenzenden Halbleitermaterial einen Hetero-Uebergang bildet.

13. Steuerungseinrichtung nach einem der Ansprüche 1 bis 12, dadurch gekennzeichnet, dass mindestens
eine der Elementelektroden jedes Halbleiterelementes aus
einer der Substanzen ITO, $SnO_2$, $In_2O_3$ und ZnO besteht.

14. Steuerungseinrichtung nach einem der Ansprüche 1 bis 13, dadurch gekennzeichnet, dass ein Teil
des Halbleiterkörpers jedes Halbleiterelementes aus einem anderen Halbleitermaterial als der restliche Teil besteht, insbesondere aus einem Halbleitermaterial mit einem anderen verbotenen Band.

15. Steuerungseinrichtung nach einem der Ansprüche 1 bis 14, dadurch gekennzeichnet, dass der Halbleiterkörper jedes Halbleiterelementes aus amorphem und/oder mikrokristallinem, mit Wasserstoff angereichertem Silizium besteht.

16. Steuerungseinrichtung nach einem der Ansprüche 1 bis 14, dadurch gekennzeichnet, dass mindestens ein Teil des Halbleiterkörpers jedes Halbleiterelementes aus einer in amorpher Form vorliegenden Verbindung von Silizium mit einem Element der Gruppe IV besteht.

17. Steuerungseinrichtung nach einem der Ansprüche 1 bis 14, dadurch gekennzeichnet, dass der Halbleiterkörper jedes Halbleiterelementes aus polykristallinem Silizium besteht.

18. Steuerungseinrichtung nach einem der Ansprüche 1 bis 14, dadurch gekennzeichnet, dass das Halbleitermaterial jedes Halbleiterelementes CdS oder CdSe ist.

19. Steuerungseinrichtung nach einem der Ansprüche 1 bis 18, dadurch gekennzeichnet, dass jedes Halbleiterelement einen angenähert symmetrischen Aufbau hat.

20. Anzeigeeinrichtung zur Darstellung einer ein Bildmuster enthaltenden Information durch Steuerung mittels der Steuerungseinrichtung nach einem der Ansprüche 1 bis 19, dadurch gekennzeichnet, dass erste Segmentelektroden, welche mit Elementelektroden der Halbleiterelemente der Steuerungseinrichtung in elektrischer Verbindung stehen, zusammen mit zweiten Segmentelektroden, welche in Gruppen an Datenleitungen angeschlossen sind, mit dem zwischen den ersten und den zweiten Segmentelektroden angeordneten feldempfindlichen Medium getrennt ansteuerbare Kondensatoren mit parallelgeschalteten Widerständen bilden.

21. Anzeigeeinrichtung nach Anspruch 20, dadurch gekennzeichnet, dass jede zweite Segmentelektrode aus mindestens drei Streifen besteht.

22. Anzeigeeinrichtung nach Anspruch 20 oder 21, dadurch gekennzeichnet, dass das Medium optisch sichtbare Feldempfindlichkeit aufweist, und dass die Steuerungseinrichtung dazu ausgebildet ist, auf ihre Halbleiterelemente fallende elektromagnetische, zweidimensionale Bildmuster enthaltende Strahlung aufzunehmen und durch Einspeisung von elektrischen Signalen in Adressen- und Datenleitungen zu modulieren.

23. Anzeigeeinrichtung nach Anspruch 22, dadurch gekennzeichnet, dass die zweiten Segmentelektroden miteinander verbunden sind, und dass auch die an die Adressenleitungen angeschlossenen Elementelektroden der Halbleiterelemente als eine Elektrode ausgebildet sind, wobei beide Elektroden grossflächig ausgebildet und an eine Wechselspannungsquelle angeschlossen sind.

24. Anzeigeeinrichtung nach einem der Ansprüche 20 bis 23, dadurch gekennzeichnet, dass sich die zweiten Segmentelektroden auf einem weiteren Substrat befinden, welches mit dem Substrat der Steuerungseinrichtung das feldempfindliche Medium, insbesondere ein Flüssigkristallmaterial, umschliesst.

25. Halbleiterelement mit mindestens zwei Elementelektroden, dadurch gekennzeichnet, dass im Halbleiterelement als Folge eines Punch-Through-Effektes bei einer bestimmten, an die Elementelektroden des Halbleiterelementes angelegten Spannung eine an freien Ladungsträgern verarmte Raumladungszone vorliegt, in deren Innern eine Potentialbarriere liegt, deren Höhe oberhalb der bestimmten Spannung von der an den Elementelektroden liegenden Spannung abhängt, wobei der durch das Halbleiterelement fliessende Strom eine Funktion der Höhe der Potentialbarriere und der Konzentration der freien Ladungsträger ist, welche durch eine äussere Einwirkung im Halbleiterelement freigemacht sind, und dass die Halbleiterkörper der Halbleiterelemente eine Dünnschichtstruktur von mehreren aneinandergrenzenden, dünnen Halbleitermaterialschichten abwechselnd unterschiedlichen Leitungstyps aufweisen, wobei die Ladung der Raumladungszone und der Verlauf des elektrischen Potentials, und dadurch der Potentialbarriere, sowohl durch die Konzentration der Dotierungsstoffatome als auch durch die Konzentration von Trapzentren, das heisst von tief im verbotenen Band liegenden Störstellen, bestimmt sind.

26. Halbleiterelement nach Anspruch 25, dadurch gekennzeichnet, dass ein Teil des Halbleiterkörpers des Halbleiterelementes undotiert ist.

27. Halbleiterelement nach Anspruch 25 oder 26, dadurch gekennzeichnet, dass mindestens in einem Teil des Halbleiterelementes die Konzentration an Trapzentren höher ist als im restlichen Teil.

28. Halbleiterelement nach einem der Ansprüche 25 bis 27, dadurch gekennzeichnet, dass der eine Leitungstyp n oder n+ und der andere Leitungstyp p oder p+ ist.

29. Halbleiterelement nach einem der Ansprüche 25 bis 27, dadurch gekennzeichnet, dass mindestens eine der Elementelektroden jedes Halbleiterelementes mit dem angrenzenden Halbleitermaterial eine Schottky-Diode bildet.

30. Halbleiterelement nach einem der Ansprüche 25 bis 27, dadurch gekennzeichnet, dass mindestens eine der Elementelektroden des Halbleiterelementes mit dem angrenzenden Halbleitermaterial einen Hetero-Uebergang bildet.

31. Halbleiterelement nach einem der Ansprüche 25 bis 30, dadurch gekennzeichnet, dass mindestens eine der Elementelektroden des Halbleiterelementes aus einer der Substanzen ITO, $SnO_2$, $In_2O_3$ und ZnO besteht.

32. Halbleiterelement nach einem der Ansprüche 25 bis 31, dadurch gekennzeichnet, dass ein Teil des Halbleiterkörpers des Halbleiterelementes aus einem anderen Halbleitermaterial als der restliche Teil besteht, insbesondere aus einem Halbleitermaterial mit einem anderen verbotenen Band.

33. Halbleiterelement nach einem der Ansprüche 25 bis 31, dadurch gekennzeichnet, dass der Halbleiterkörper des Halbleiterelementes aus amorphem und/oder mikrokristallinem, mit Wasserstoff angereichertem Silizium besteht.

34. Halbleiterelement nach einem der Ansprüche 25 bis 32, dadurch gekennzeichnet, dass mindestens ein Teil des Halbleiterkörpers des Halbleiterelementes aus einer in amorpher Form vorliegenden Verbindung von Silizium mit einem Element der Gruppe IV besteht.

35. Halbleiterelement nach einem der Ansprüche 25 bis 32, dadurch gekennzeichnet, dass der Halbleiterkörper des Halbleiterelementes aus polykristallinem Silizium besteht.

36. Halbleiterelement nach einem der Ansprüche 25 bis 32, dadurch gekennzeichnet, dass das Halbleitermaterial des Halbleiterelementes CdS oder CdSe ist.

37. Halbleiterelement nach einem der Ansprüche 25 bis 36, dadurch gekennzeichnet, dass es einen angenähert symmetrischen Aufbau hat.

38. Verwendung mehrerer Halbleiterelemente nach einem der Ansprüche 25 bis 37, dadurch gekennzeichnet, dass die ersten Elementelektroden der Halbleiterelemente in Gruppen an mit Anschlussorganen versehene Datenleitungen angeschlossen sind, und dass beim Abtasten der einzelnen Halbleiterelemente durch Anlegen von Spannungen an die Anschlussorgane der Datenleitungen und von mit den zweiten Elementelektroden in elektrischer Verbindung stehenden Adressenleitungen der durch das adressierte Halbleiterelement fliessende elektrische Strom eine Funktion einer auf die Halbleiterelemente fallenden elektromagne-

tischen Strahlung ist, welche durch Absorption Ladungsträger in den Halbleiterelementen freisetzt, derart, dass die auf die Halbleiterelemente auftretende Bildmusterinformation der elektromagnetischen Strahlung in elektrische Signale mit zugeordneten Koordinaten umgesetzt wird.

39. Verwendung nach Anspruch 38, dadurch gekennzeichnet, dass die Elementelektrode, durch welche die elektromagnetische Strahlung in das Halbleiterelement eintritt, für diese Strahlung durchlässig ist.

40. Verwendung nach Anspruch 38 oder 39, dadurch gekennzeichnet, dass die Datenleitungen und die Adressenleitungen streifenförmig ausgebildet sind, und dass die sich, in Projektion gesehen, überlappenden Teile der Datenleitungen und der dazu quer liegenden Adressenleitungen die aktiven Teile der einzelnen Halbleiterelemente bestimmen.

0126914

## Fig.1

## Fig. 2

## Fig. 3

0126914

## Fig. 4

## Fig. 5

0126914

## Fig. 6

## Fig. 7